(19) Europäisches Patentamt / European Patent Office / Office européen des brevets

(11) **EP 1 168 003 B1**

(12) **FASCICULE DE BREVET EUROPEEN**

(45) Date de publication et mention
de la délivrance du brevet:
**27.05.2009 Bulletin 2009/22**

(51) Int Cl.:
***G01V 8/10*** *(2006.01)*

(21) Numéro de dépôt: **01401583.8**

(22) Date de dépôt: **15.06.2001**

(54) **Dispositif de mesure de pollution spatiale**

Vorrichtung zur Messung der räumlichen Verschmutzung

Device for measuring space pollution

(84) Etats contractants désignés:
**DE FR GB IT NL**

(30) Priorité: **22.06.2000 FR 0008511**

(43) Date de publication de la demande:
**02.01.2002 Bulletin 2002/01**

(73) Titulaire: **THALES**
**92200 Neuilly sur Seine (FR)**

(72) Inventeurs:
• **Thillot, Marc,**
**c/o THALES Intellectual Property**
**94117 Arcueil Cedex (FR)**
• **Midavaine,Thierry**
**c/o THALES Intellectual Property**
**94117 Arcueil Cedex (FR)**

(74) Mandataire: **Henriot, Marie-Pierre**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 769 991**   **US-A- 5 309 159**
**US-A- 5 421 540**

• **HOULT C P ET AL: "Space surveillance catalog growth during SBIRS low deployment" 1999 IEEE AEROSPACE CONFERENCE. PROCEEDINGS (CAT. NO.99TH8403), 1999 IEEE AEROSPACE CONFERENCE. PROCEEDINGS, SNOWMASS AT ASPEN, CO, USA, 6-13 MARCH 1999, pages 209-224 vol.4, XP002162940 1999, Piscataway, NJ, USA, IEEE, USA ISBN: 0-7803-5425-7**
• **SRIDHARAN R ET AL: "U.S. space surveillance network capabilities" PROCEEDINGS OF THE 1998 CONFERENCE ON IMAGE INTENSIFIERS AND APPLICATIONS;AND CHARACTERISTICS AND CONSEQUENCES OF SPACE DEBRIS AND NEAR-EARTH OBJECTS; SAN DIEGO, CA, USA JUL 23 1998, vol. 3434, 1998, pages 88-100, XP000991330 Proc SPIE Int Soc Opt Eng; Proceedings of SPIE - The International Society for Optical Engineering 1998 SPIE, Bellingham, WA, USA**
• **LEUSHACKE L ET AL: "FIRST FGAN/MPIFR COOPERATIVE DEBRIS OBSERVATION CAMPAIGN: EXPERIMENT OUTLINE AND FIRST RESULTS" PROCEEDINGS OF THE EUROPEAN CONFERENCE ON SPACE DEBRIS, 17 mars 1997 (1997-03-17), XP000749363**

**Description**

L'invention concerne le domaine de la pollution spatiale. La pollution spatiale est la présence dans l'espace, généralement en orbite autour de la planète Terre, de débris spatiaux. Les débris spatiaux sont d'origine humaine, ce sont alors par exemple des restes d'étages de fusée ou de satellite largués par ceux-ci soit au cours de leur mise sur orbite soit pendant leur évolution sur orbite, ou bien d'origine naturelle. Les débris spatiaux considérés sont en particulier les débris non géostationnaires, les débris géostationnaires pouvant plus facilement être observés depuis la Terre par télescope.

La pollution croissante accentue le risque de collision entre les débris spatiaux et les satellites ainsi qu'entre les débris spatiaux et les engins spatiaux habités, ce qui pose un problème de sécurité pour les satellites et les engins spatiaux habités. Une possibilité consisterait à protéger les satellites ou les engins spatiaux habités contre un éventuel choc avec des débris spatiaux. Une autre possibilité consiste à s'arranger pour que les satellites et les engins spatiaux habités puissent éviter un éventuel choc avec des débris spatiaux. Pour cela, il est intéressant de connaître la répartition des débris spatiaux dans l'espace, et également de manière avantageuse leur trajectoire, ce qui correspond à un problème de mesure de la pollution spatiale.

Selon un premier art antérieur, des satellites sont équipés de plaques à impact, ce qui permet de dénombrer les débris spatiaux par comptage, à certaines périodes, des impacts de ces débris spatiaux sur la plaque. Un inconvénient de cette technique de comptage par impact est la restriction aux populations de débris spatiaux de petite taille. Un autre inconvénient est l'inadaptation au dénombrement des débris de grosse taille à cause de l'énergie cinétique de ces débris de grosse taille qui risque d'endommager la plaque, voire même le satellite.

Selon un deuxième art antérieur, un réseau de stations radar au sol, c'est-à-dire sur Terre, permet de suivre l'évolution des débris spatiaux de grosse taille (voir par exemple, l'article de R. Sridharan et A. F. Pensa, "U.S. space surveillance network capabilities", Proceedings of the 1998 Conference of SPIE-The International Society for Optical Engineering. Un inconvénient de cette technique de suivi radar au sol est que les débris spatiaux de petite taille ne peuvent pas être repérés car leur SER (surface équivalente radar) est trop faible.

Or aujourd'hui, le premier art antérieur ne permet de dénombrer que des débris spatiaux dont la taille reste typiquement inférieure à la centaine de microns. Le deuxième art antérieur ne permet de dénombrer que des débris spatiaux dont la taille reste typiquement supérieure à la dizaine de centimètres. Pour une gamme de débris, que nous appellerons « intermédiaire », c'est-à-dire dont la taille est typiquement comprise entre 100μm et 10cm, les premier et deuxième arts antérieurs permettent difficilement la mesure de la pollution spatiale. Le blindage des satellites est généralement inefficace contre les débris de taille intermédiaire.

Selon un troisième art antérieur, pour les débris de petite taille, c'est-à-dire dont la taille est typiquement inférieure à 100μm, la mesure de la pollution spatiale est réalisée selon le premier art antérieur, tandis que pour les débris de grosse taille, c'est-à-dire dont la taille est typiquement supérieure à 10cm, la mesure de la pollution spatiale est réalisée selon le deuxième art antérieur. Enfin, pour les débris de taille intermédiaire, c'est-à-dire dont la taille est typiquement comprise entre 100μm et 10cm, une extrapolation est effectuée à partir de modèles théoriques et à partir des mesures de pollution spatiale réalisées pour les débris de petite et de grosse taille, respectivement selon les premier et deuxième arts antérieurs précités. Un inconvénient de cette technique par extrapolation est la difficulté de déterminer le domaine de validité et la précision des extrapolations effectuées.

L'invention propose un dispositif de mesure de la pollution spatiale, particulièrement adapté aux débris spatiaux de taille intermédiaire, c'est-à-dire dont la taille est typiquement comprise entre 100μm et 10cm. Ce dispositif est basé sur l'utilisation d'un imageur passif dans le domaine optique. Ce dispositif est destiné à être embarqué sur un satellite. Dans toute la suite du texte, sauf mention contraire, on parlera tout simplement de débris pour désigner les débris spatiaux.

Selon l'invention, il est prévu un dispositif de mesure de pollution spatiale, destiné à être embarqué sur satellite, comportant : au moins un imageur passif pouvant fournir des images de l'espace ; des moyens de détection des débris spatiaux présents sur les images de l'espace, déterminant la trace desdits débris ; des moyens de localisation distance des débris détectés, déterminant les distances des débris détectés par rapport au satellite ; des moyens de classification des débris localisés, déterminant pour chaque débris localisé sa classe qui est le produit de son albédo moyen par sa surface apparente.

L'invention sera mieux comprise et d'autres particularités et avantages apparaîtront à l'aide de la description ci-après et des dessins joints, donnés à titre d'exemples, où :

- la figure 1 représente schématiquement un diagramme fonctionnel préférentiel des différentes fonctions réalisées par un dispositif de mesure de pollution spatiale selon l'invention ;
- la figure 2 représente schématiquement un exemple préférentiel de réalisation des fonctions de prétraitement et de détection réalisées par un dispositif de mesure de pollution spatiale selon l'invention ;
- la figure 3 représente schématiquement un diagramme explicatif d'une réalisation préférentielle de la fonction localisation distance, à savoir par triangulation dite « dynamique ».

Le dispositif de mesure de pollution spatiale est destiné à être embarqué sur un satellite, de manière à fonctionner lorsque ce satellite sera dans l'espace, par exemple en orbite autour de la Terre. Ce dispositif comporte au moins un imageur passif dans le domaine optique, le domaine optique allant de l'ultraviolet à l'infrarouge. Cet imageur passif fournit des images de l'espace lesquelles peuvent ensuite être utilisées, directement ou indirectement, par différents moyens inclus dans ce dispositif. Les images de l'espace sont de préférence la réflexion de l'éclairement solaire dans le domaine du visible par les débris. Un type de moyen, par exemple moyens de détection, indique qu'une fonction détection est réalisée, quelque soit la manière dont celle-ci est réalisée ; toutes les fonctions peuvent par exemple être réalisées par un unique microprocesseur, ou bien par exemple chacune d'elles peut être réalisée par un composant dédié différent avec éventuellement une logique de gestion réalisant la coordination des différents composants entre eux.

A partir des images de l'espace fournies par l'imageur passif, des moyens de détection déterminent la trace des débris présents sur les images de l'espace, c'est-à-dire certaines données relatives à ces traces. L'imageur passif fonctionnant avec un temps d'intégration donné par image, un débris se déplaçant rapidement dans le champ de l'imageur passif, avec une vitesse typiquement comprise entre 0 et 15km/s, laissera le plus souvent une trace, c'est-à-dire une traînée d'une certaine longueur, au lieu d'un simple point sur une image de l'espace, à condition d'une part que la définition de l'imageur passif soit suffisante et d'autre part qu'il ne passe pas trop loin et/ou trop lentement dans le champ de l'imageur passif. Concernant la trace d'un débris, les moyens de détection déterminent préférentiellement la position ou coordonnées de la trace, l'extension ou étendue de la trace, l'intensité ou amplitude de la trace.

Puis, pour un débris détecté, par exemple à partir de la trace du débris sur plusieurs images de l'espace, les moyens de localisation distance déterminent la distance du débris détecté par rapport au satellite, c'est-à-dire la distance qu'il y a entre le débris détecté et le satellite portant le dispositif de mesure de la pollution spatiale.

Enfin, pour un débris localisé, en fait pour un débris détecté et localisé, des moyens de classification déterminent la classe du débris localisé, la classe d'un débris correspondant au produit de l'albédo moyen, c'est-à-dire réflectivité moyenne, par sa surface apparente, c'est-à-dire la surface équivalente qui peut être vue depuis le satellite. Pour déterminer la classe d'un débris localisé, les moyens de classification utilisent de préférence la distance de ce débris par rapport au satellite et l'amplitude de la trace du débris.

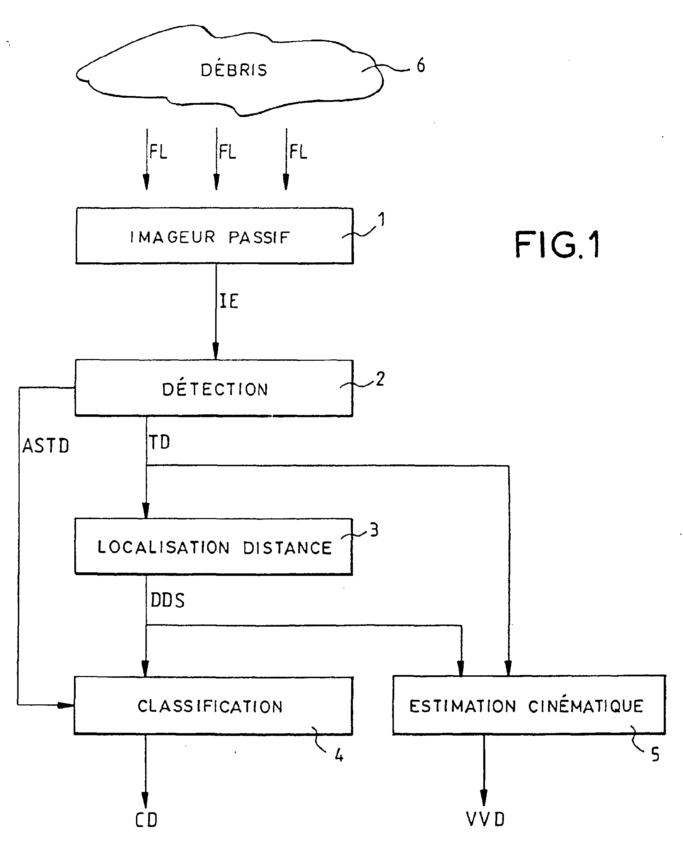

La figure 1 représente schématiquement un diagramme fonctionnel préférentiel des différentes fonctions réalisées par un dispositif de mesure de pollution spatiale selon l'invention. Un débris 6 passant dans le champ d'observation d'un imageur passif 1 émet un flux lumineux FL en direction de l'imageur passif 1. Le flux lumineux FL est par exemple la lumière solaire dans le domaine du visible, lumière solaire qui est réfléchie dans une certaine mesure par le débris 6 en direction de l'imageur passif 1. A partir de ce flux lumineux FL provenant du débris 6 situé dans le champ de l'imageur passif 1, l'imageur passif 1 fournit une ou plusieurs images IE de l'espace sur laquelle ou sur lesquelles se trouve une trace TD du débris 6, éventuellement un simple point si le débris 6 est très lent et/ou très loin du satellite. Dans le cas d'un simple point, l'exploitation de l'image IE de l'espace sera plus difficile. Une image IE de l'espace peut bien sûr contenir plusieurs traces de débris différents, la figure 1 ne représentant le cas que d'un seul débris 6 pour des raisons de simplicité.

A partir de l'image IE de l'espace, des moyens 2 de détection déterminent la trace TD du débris 6 ainsi que l'amplitude ASTD du signal de la trace TD du débris 6.

Des moyens 3 de localisation distance déterminent la distance DDS du débris 6 par rapport au satellite, par exemple par triangulation dynamique à partir des traces TD du débris 6 sur plusieurs images IE de l'espace.

Des moyens 4 de classification déterminent la classe CD du débris 6, c'est-à-dire le produit de l'albédo moyen du débris 6 par la surface apparente du débris 6, à partir de la distance DDS du débris 6 par rapport au satellite, distance qui est fournie par les moyens 3 de localisation distance et à partir de l'amplitude ASTD du signal de la trace TD du débris 6, amplitude qui est fournie par les moyens 2 de détection.

De préférence, des moyens 5 d'estimation cinématique déterminent le vecteur vitesse WD du débris 6 à partir de la distance DDS du débris 6 par rapport au satellite qui est fournie par les moyens 3 de localisation distance et à partir de la trace TD du débris 6 qui est fournie par les moyens 2 de détection.

Avec le temps d'intégration qui est choisi pour l'imageur passif, la plupart des débris de taille intermédiaire, passant à une distance satellite n'excédant pas la portée du dispositif de mesure de pollution spatiale selon l'invention, laisse une trace et non un point sur chacune des images de l'espace sur lesquelles le débris est présent. La vitesse des débris étant élevée, les traces peuvent souvent être assimilées à des segments de droite. De préférence, les moyens de détection réalisent un filtrage des images de l'espace qui soit adapté aux débris en facilitant l'extraction des traces sensiblement rectilignes à partir des images de l'espace, ce qui rend la détection des débris plus efficace.

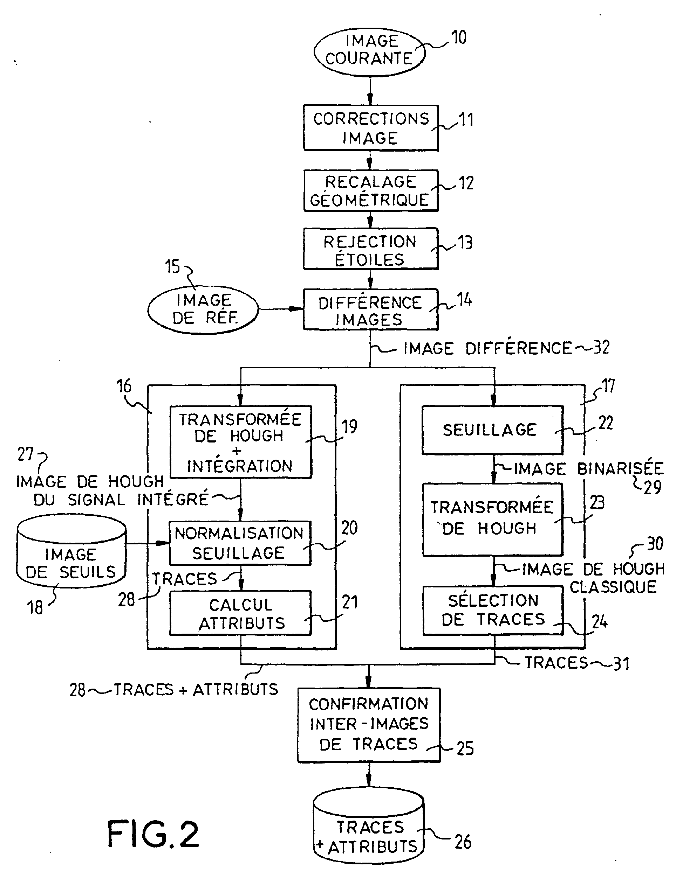

Dans un mode de réalisation préférentiel, le filtrage comporte une transformation de Hough particulièrement adaptée à la mise en évidence de portions de droite dans une image, mais d'autres traitements sont possibles. Le principe de la transformation de Hough est expliqué plus en détail en liaison avec la figure 2. De manière avantageuse, la transformation de Hough est appliquée aux images de l'espace sans seuillage préalable, c'est-à-dire sans seuillage préalablement à la réalisation de la transformation de Hough, ce qui a l'avantage d'améliorer nettement le rapport signal à bruit sur une grande partie du domaine des débris de taille intermédiaire que le dispositif de mesure de pollution spatiale selon l'invention a pour but de classifier. Le rapport signal à bruit, dans des conditions usuelles et en limite de portée, est amélioré pour les débris dont la taille varie sensiblement entre 100μm et 2cm, tandis qu'il est légèrement dégradé pour les débris dont la taille varie de 2cm à 10cm. Après la transformation de Hough, le filtrage effectue, dans le domaine de Hough, une intégration, une normalisation à l'aide d'une image de comptage, un seuillage, comme expliqué plus en détail au niveau de la figure 2. Les opérations d'intégration dans le domaine de Hough, de normalisation à l'aide d'une image de comptage et de seuillage sont préférentiellement effectuées successivement, les opérations de normalisation et de seuillage pouvant être réalisées simultanément en une seule opération.

Afin de ne pas dégrader le rapport signal à bruit pour les débris dont la taille est sensiblement comprise entre 2cm et 10cm en limite de portée, en parallèle de la transformation de Hough sans seuillage préalable des images de l'espace, le filtrage effectue avantageusement une autre transformation de Hough après seuillage préalable des images de l'espace, c'est-à-dire une transformation de Hough classique sur une image rendue binaire ; ainsi par le biais de l'ensemble de ces deux transformations de Hough, respectivement sans et avec seuillage préalable, le rapport signal à bruit est optimisé sur tout le domaine des débris de taille intermédiaire. Afin de trouver un bon compromis entre le taux de fausse alarme et le taux de détection des débris passant dans le champ de l'imageur passif à une distance qui n'excède pas la portée de l'imageur passif, le seuillage pour chacune des transformations de Hough, que ce soit sans ou avec seuillage préalable, est effectué par exemple avec un seuil valant sensiblement trois fois le niveau de bruit.

Avant que les moyens de détection ne traitent les images de l'espace, les images de l'espace font de préférence l'objet d'un prétraitement effectué par des moyens de prétraitement non représentés sur la figure 1. Sur les images de l'espace directement issues de l'imageur passif, les moyens de traitement, effectuent, selon le besoin, avant le traitement réalisé par les moyens de détection, tout ou partie des opérations suivantes, à savoir une opération de correction des défauts de l'imageur passif, une opération de recalage spatial de chaque image de l'espace par rapport à une image référence, en particulier pour un imageur passif à faible cadence d'image, une opération de réjection des étoiles fixes ainsi que de leur tache dite de « smearing » (extension en forme de ligne ou de colonne sur le détecteur généralement matriciel, passant par l'image d'une étoile fixe habituellement assez lumineuse), à partir de plusieurs images de l'espace consécutives dans le temps, une opération de soustraction de l'image de référence à chaque image de l'espace. Toutes ces différentes opérations seront décrites plus en détail avec la figure 2, au niveau d'un exemple préférentiel.

La figure 2 représente schématiquement un exemple préférentiel de réalisation des fonctions de prétraitement et de détection réalisées par un dispositif de mesure de pollution spatiale selon l'invention. Une image 10 donnée de l'espace est considérée et est appelée image courante. L'image 10 courante va subir plusieurs opérations successives de prétraitement.

L'image 10 courante subit d'abord une opération 11 de correction. La correction porte essentiellement sur les défauts de l'imageur passif, à savoir les non-homogénéités en gain et en offset. La calibration permettant cette correction peut être réalisée en utilisant la moyenne sur plusieurs images de différents fonds stellaires, c'est-à-dire de différentes portions de l'espace pouvant être observées par le satellite, dans lesquelles portions de l'espace peuvent être vues des étoiles de référence.

Ensuite, l'image 10 courante subit une opération 12 de recalage spatial. Le recalage spatial consiste à recaler spatialement l'image courante 10 par rapport à l'image 15 dite de référence. L'image 15 de référence est préférentiellement la dernière image qui ne contient pas de débris spatiaux et qui est stockée dans le dispositif de mesure de pollution spatiale. L'image 15 de référence est par exemple l'image courante précédente de laquelle ont été retirées les traces de débris. Cette opération de recalage spatial ne se justifie que pour des cadences de prise d'image qui sont basses ; dans le cas d'une cadence élevée de prise d'image au niveau de l'imageur passif, cette opération de recalage spatial devient superflue et peut par conséquent être omise.

Puis, l'image 10 courante subit une opération 13 de réjection des étoiles fixes. L'opération 13 de réjection des étoiles fixes est basée sur un seuillage permettant l'élimination des étoiles fixes correspondant à des signaux statiques sur les images courantes successives dans le temps, à partir de l'analyse de plusieurs images courantes successives dans le temps. Les étoiles fixes, et tout particulièrement les étoiles fixes de faible magnitude, ainsi que leur tache dite de « smearing » (extension en forme de ligne ou de colonne sur le détecteur généralement matriciel, passant par l'image d'une étoile fixe habituellement assez lumineuse) sont ainsi éliminées de l'image 10 courante.

Enfin, l'image 10 courante subit une opération 14 de soustraction d'images. L'image 15 de référence est soustraite de l'image 10 courante, le résultat de cette opération de soustraction donnant une image 32 différence. L'image 32 différence est la transformation par les opérations de prétraitement de l'image 10 courante. L'image 32 différence va être exploitée par les moyens de détection.

Deux types de procédés de filtrage sont effectués en parallèle par les moyens de détection. Un procédé 16 de filtrage pour détection de traces larges est spécialement adapté aux traces larges de débris, c'est-à-dire aux traces plus longues en terme de nombre de points sur l'image 32 différence qui appartiennent respectivement aux dites traces. Le procédé 16 de filtrage pour détection de traces larges correspond à des débris dont la vitesse angulaire est plus élevée, ce qui correspond, en limite de portée du dispositif de mesure de pollution spatiale, à des débris plus proches du satellite et donc de taille plus faible. Un procédé 17 de filtrage pour détection de traces étroites est spécialement adapté aux traces étroites de débris, c'est-à-dire aux traces plus courtes en terme de nombre de points sur l'image 32 différence qui appartiennent respectivement aux dites traces. Le procédé 17 de filtrage pour détection de traces étroites correspond à des débris dont la vitesse angulaire est plus faible, ce qui correspond, en limite de portée du dispositif de mesure de pollution spatiale, à des débris plus lointains et donc de taille plus importante. Pour des conditions et un dimensionnement standard du dispositif de mesure de pollution spatiale, le procédé 16 de filtrage pour détection de traces larges donne, en limite de portée, de meilleurs résultats que le procédé 17 de filtrage pour détection de traces étroites pour des débris dont la taille est sensiblement comprise entre 100$\mu$m et 2cm mais des résultats moins bons pour les débris dont la taille est sensiblement comprise entre 2cm et 10cm.

Le procédé 16 de filtrage pour détection de traces larges comporte plusieurs opérations dont certaines ont été regroupées en blocs sur la figure 2, les différents blocs se déroulant successivement. Sur l'image 32 différence qui est la transformation de l'image 10 courante par l'ensemble des opérations de prétraitement, est effectuée une transformation de Hough avec postintégration 19, c'est-à-dire une transformation de Hough suivie d'une intégration dans le domaine de Hough. Cette transformation de Hough est un type de traitement préférentiel facilitant l'extraction de traces de forme sensiblement rectiligne à partir d'une image de l'espace, ici l'image 32 différence obtenue après prétraitement. Plus la trace est rectiligne et plus son extraction de l'image de l'espace sera facilitée par l'utilisation de la transformation de Hough. Dans le procédé 16 de filtrage pour détection de traces larges, la transformation de Hough avec postintégration 19 est effectuée sans seuillage préalable, ce qui permet d'améliorer le rapport signal à bruit pour une large gamme des débris de taille intermédiaire.

Dans le domaine de l'image de l'espace, c'est-à-dire plus précisément de l'image 32 différence, une infinité de droites peuvent passer par un point de coordonnées x et y appartenant au domaine de l'image de l'espace, chaque droite étant définie d'une part par sa distance p à l'origine et d'autre part par l'angle $\theta$ que fait par rapport à l'un des axes la hauteur abaissée à partir de l'origine sur la droite considérée. Chacune de ces droites est représentée dans le domaine de Hough par un point de coordonnées p et $\theta$. Après transformation de Hough suivie d'une intégration dans le domaine de Hough, chaque point dans le domaine de Hough représente une direction donnée de trace de débris localisée à un endroit donné dans l'espace. Le niveau de la trace de débris est égal au signal intégré dans ladite direction donnée. L'ensemble de ces points dans le domaine de Hough constitue l'image 27 de Hough du signal intégré.

Pour une image de l'espace de format donné, par exemple de format carré, le nombre de points dans le domaine de l'image de l'espace associés à chaque point dans le domaine de Hough n'est pas le même d'où l'intérêt d'une normalisation avant seuillage. Une image dite de comptage représente, pour chaque point dans le domaine de Hough, le nombre de points associés dans le domaine de l'image de l'espace. A partir de cette image de comptage, est calculée une image 18 de seuils déterminant, pour chaque point dans le domaine de Hough, le seuil qui doit lui être appliqué lors du seuillage en vue de la normalisation. Cette image 18 de seuils n'est qu'une image déterminant les valeurs relatives des seuils pour les différents points dans le domaine de Hough, le taux de fausses alarmes souhaité ou toléré devant être pris en compte pour la détermination des valeurs absolues desdits seuils. Par l'utilisation d'une image 18 de seuils, la normalisation avec image de comptage et le seuillage sont effectués en une seule opération appelée normalisation seuillage 20 dont le résultat est un ensemble de traces 28 de débris. Avant le calcul 21 des attributs des traces 28 des débris, les traces 28 de débris peuvent être affinées d'abord par transformations de Hough supplémentaires, locales respectivement autour desdites traces 28 de débris, avec un pas d'échantillonnage dans le domaine de Hough qui sera plus fin que pour la transformation de Hough globale 19, puis par filtrage multiéchelle adapté à l'extension de la trace 28 de débris. Un filtrage multiéchelle consiste à moyenner le signal sur une fenêtre de largeur variable, la position de la fenêtre étant variable.

Le procédé 17 de filtrage pour détection de traces étroites comporte plusieurs opérations successives. Sur l'image 32 différence, est effectué un seuillage 22 donnant une image 29 binarisée, c'est-à-dire rendue binaire par le seuillage 22. Le seuil du seuillage 22 est déterminé en fonction du bruit de fond et du taux de fausses alarmes souhaité.

Sur l'image binarisée 29, est effectuée une transformation de Hough 23 donnant une image 30 de Hough classique. La charge de calcul sur l'image 29 binarisée est nettement plus faible que celle de la transformation de Hough avec postintégration 19 sur l'image 32 différence non préalablement seuillée dans le procédé 16 de filtrage pour détection de traces larges.

Sur l'image 30 de Hough classique, est effectuée une sélection 24 des traces donnant un ensemble de traces 31 de débris. Les traces 31 de débris sont sélectionnées sur des critères de nombre minimum, par exemple au moins trois, de points jointifs dans l'image 29 binarisée.

Sur plusieurs images 32 différence de préférence consécutives dans le temps, une confirmation inter-images de traces est réalisée, aussi bien pour les traces 28 de débris obtenues par le procédé 16 de filtrage pour détection de traces larges que pour les traces 31 de débris obtenues par le procédé 17 de filtrage pour détection de traces étroites, de manière à diminuer le taux de fausses alarmes. Pour cela, le dispositif de mesure de pollution spatiale selon l'invention comporte des moyens de réjection des fausses alarmes par confirmation des détections de débris sur plusieurs images de l'espace consécutives dans le temps, ces moyens de réjection n'étant pas représentés sur les figures pour des raisons de simplicité. Pour les traces confirmées, les attributs correspondants sont déterminés lors de l'opération 26, s'ils n'ont pas déjà été déterminés lors de l'opération 21 de calcul des attributs. Les attributs des traces sont de préférence le nombre de points de la trace de débris dans le domaine de l'image de l'espace, la position de ces points, le niveau de signal de ces points, et la date à laquelle cette trace a été détectée.

De préférence, les moyens de localisation distance réalisent une triangulation dynamique à partir de plusieurs images de l'espace, la triangulation dynamique comportant plusieurs étapes successives, pour la détermination de la distance entre un débris détecté et le satellite. D'abord, une étape d'estimation de la vitesse angulaire dudit débris détecté à partir de l'extension de la trace dudit débris détecté sur l'une desdites images de l'espace. L'extension de la trace du débris est aussi appelée extension angulaire de la trace du débris car elle est représentative du déplacement angulaire du débris. Ensuite, une étape d'extrapolation ramenant à un même instant les positions dudit débris détecté correspondant respectivement aux différentes traces dudit débris détecté respectivement présentes sur lesdites images de l'espace, ladite extrapolation ne modifiant pas une position qui est déjà audit instant considéré. Puis, une étape de triangulation classique des positions extrapolées.

La triangulation classique de deux positions du même objet à un même instant donné vues par deux capteurs distincts consiste à déterminer la distance de l'objet à l'un des capteurs ou à un point lié à la position des capteurs, par exemple le milieu du segment joignant les capteurs, par l'utilisation d'une relation classique exprimant cette distance en fonction des coordonnées angulaires de l'objet relatives à chaque capteur et en fonction de la distance entre les capteurs.

La triangulation dynamique est préférentiellement réalisée avec un seul imageur passif à partir de deux images de l'espace consécutives dans le temps et à partir de la distance intersatellite. La distance intersatellite entre ces deux images de l'espace consécutives dans le temps vaut avantageusement quelques centaines de mètres. La distance intersatellite est la distance existant entre les deux positions du satellite respectivement aux deux instants correspondant respectivement aux deux images de l'espace considérées.

L'ensemble des étapes d'estimation, d'extrapolation et de triangulation classique, qui sont des étapes fonctionnelles, peuvent par exemple être réalisées par un seul moyen de traitement du type microprocesseur.

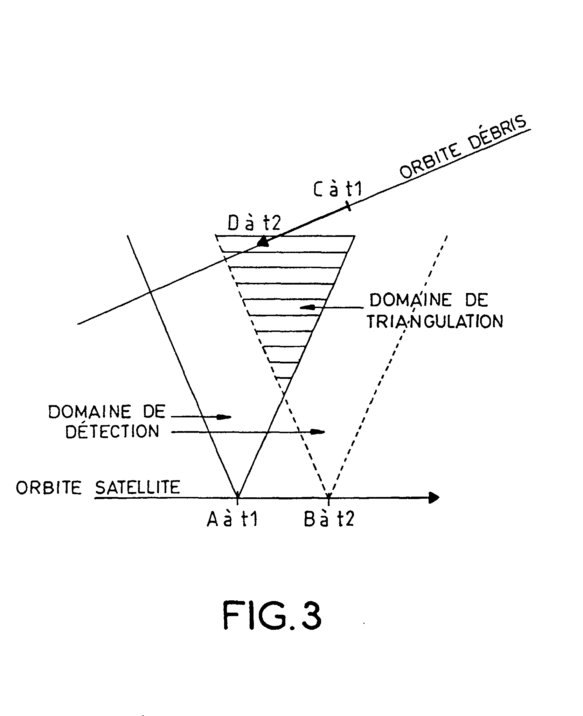

Un mode de réalisation préférentiel de cette triangulation dynamique va maintenant être décrit en liaison avec la figure 3. La figure 3 représente schématiquement un diagramme explicatif d'une réalisation préférentielle de la fonction localisation distance, à savoir par triangulation dynamique.

Dans ce mode de réalisation, deux images de l'espace consécutives dans le temps sont utilisées. Un satellite se déplace sur une orbite satellite. A chacune des deux positions A et B du satellite sur l'orbite satellite respectivement aux instants t1 et t2, correspond un domaine de détection pour l'imageur passif du dispositif de mesure de pollution spatiale embarqué sur le satellite. Le domaine de détection pour la position A du satellite à l'instant t1 est indiqué en traits pleins, tandis que le domaine de détection pour la position B du satellite à l'instant t2 est indiqué en traits pointillés. L'intersection des deux domaines de détection précités constitue le domaine de triangulation indiqué par des hachures horizontales. Supposons qu'un débris se déplace sur une orbite débris. A l'instant t1, lorsque le satellite est en position A, le débris est sur une position C, la position C devant se trouver dans le domaine de détection associé à la position A pour que le débris puisse être détecté par l'imageur passif. A l'instant t2, lorsque le satellite est en position B, le débris est sur une position D, la position D devant se trouver dans le domaine de détection associé à la position B pour que le débris puisse être détecté par l'imageur passif. Par conséquent, pour que le distance du débris par rapport au satellite puisse être détectée, il faut que les deux positions C et D du débris, respectivement aux instants t1 et t2, soient situées dans le domaine de triangulation. A l'instant t1, lorsque le satellite est en position A, les coordonnées angulaires de la position C du débris relatives à la position A du satellite (c'est-à-dire par rapport à la position A prise comme origine) peuvent être déterminées. A l'instant t2, lorsque le satellite est en position B, les coordonnées angulaires de la position D du débris relatives à la position B du satellite peuvent être déterminées. En fait, les positions C et D sont des traces ayant une certaine extension sur les images de l'espace prises par l'imageur passif respectivement lorsque le satellite était sur les positions A et B. A partir de l'extension angulaire de l'une de ces traces, une estimation de la vitesse angulaire du débris peut être effectuée. A partir de cette estimation de la vitesse angulaire du débris, une extrapolation des coordonnées angulaires relatives à la position B du satellite, peut être effectuée pour la position C du débris à l'instant t1 ; cette extrapolation permet de déterminer les coordonnées angulaires d'une position appelée D' du débris relativement à la position B à l'instant t1, la position D' étant confondue dans l'espace avec la position C, seul change le point d'origine A ou B du repère dans lequel ces coordonnées angulaires sont mesurées. Ainsi sont déterminés deux jeux de coordonnées angulaires de la position du débris au même instant t1, respectivement relatives à la position A du satellite et à la position B du satellite, ces deux jeux de coordonnées angulaires correspondant respectivement aux positions extrapolées C et D'. Une triangulation classique peut donc être effectuée à partir de ces deux positions extrapolées C et D' au même instant t1 (la position C déjà à l'instant t1 n'ayant en fait pas été modifiée par l'extrapolation), c'est-à-dire à partir de ces deux jeux de coordonnées angulaires déterminées au même instant t1 ; on obtient alors la distance du débris par rapport au satellite à l'instant t1. Dans certains cas, on peut se contenter d'une gamme de distances au lieu d'une distance précise. Bien sûr, la triangulation dynamique aurait pu être réalisée, par exemple, à partir de positions extrapolées à l'instant t2 ou bien à partir de plus de deux images de l'espace consécutives dans le temps.

Dans un exemple numérique préférentiel, la distance intersatellite entre deux images consécutives, c'est-à-dire entre les positions A et B, vaut environ 800m, ce qui correspond à une cadence image de 10Hz, pour une vitesse satellite d'environ 8km/s. Le domaine de détection, c'est-à-dire le champ de l'imageur passif vaut environ 7,5°. Le détecteur matriciel utilisé comporte sensiblement 1000 détecteurs dans chaque direction. Le dispositif considéré donne de très bons résultats pour une gamme de distances débris à satellite allant sensiblement de 10km à 100km, les résultats étant sensiblement moins bons pour une gamme de distances débris à satellite allant sensiblement de 100km et 1000km. Pour des distances très inférieures à 10km, les débris sortent du domaine de triangulation dans l'exemple choisi.

La distance intersatellite entre deux images de l'espace consécutives dans le temps est choisie pour que les portées que l'on veut atteindre soient incluses dans le domaine de triangulation. La distance intersatellite est déterminée par la cadence image de l'imageur passif et par la vitesse du satellite. Pour appliquer la triangulation dynamique, chaque débris est contenu dans au moins deux images de l'espace consécutives dans le temps, l'extension de la trace étant pour cela inférieure à l'étendue du champ image de l'imageur passif. L'extension de la trace couvre de préférence plus d'un détecteur élémentaire lorsque l'imageur passif comporte un détecteur matriciel, afin de faciliter l'extraction de la trace à partir de l'image de l'espace, laquelle extraction est réalisée par détection d'alignement des détecteurs élémentaires couverts par ladite trace. Le procédé d'extrapolation, à partir d'une position de débris à un instant donné, à une position de débris à un autre instant, est suffisamment précis pour permettre la détermination de la distance du débris par rapport au satellite avec la précision voulue.

A partir de la localisation angulaire ou position angulaire du débris, obtenue par la position de la trace dans l'image de l'espace, à partir de la distance du débris par rapport au satellite, obtenue par triangulation dynamique comme expliqué ci-dessus, ainsi qu'à partir des informations concernant la position et l'attitude du satellite, le vecteur position du débris dans un repère absolu peut être établi.

Les moyens de classification déterminent la classe d'un débris détecté par les moyens de détection et localisé par les moyens de localisation distance. La classe d'un débris est de préférence déterminée à partir de la distance dudit débris par rapport au satellite et à partir de l'amplitude du signal correspondant à la trace dudit débris sur une image de l'espace. La distance du débris par rapport au satellite est fournie par les moyens de localisation distance tandis que l'amplitude du signal correspondant à la trace du débris sur une image de l'espace est fournie par les moyens de détection.

Dans un mode de réalisation préférentiel, les moyens de classification réalisent une étape de calcul pour la détermination de la classe d'un débris. Cette étape de calcul de la classe ρ.surf dudit débris, pm étant l'albédo moyen dudit débris et surf sa surface apparente, consiste à appliquer la formule suivante :

$$pm \cdot surf = \frac{ASTD \cdot d^2}{K_{caméra} \cdot T_{int} \cdot E_{solaire}}$$ avec d distance dudit débris par rapport au satellite, $K_{caméra}$ une constante dépendant de l'imageur passif, $T_{int}$ le temps d'intégration de l'imageur passif, $E_{solaire}$ l'éclairement solaire, ASTD l'amplitude du signal de la trace du débris.

La classe du débris est le produit pm.surf de son albédo moyen pm (ou réflectivité moyenne) par sa surface apparente surf (surface « vue » par l'imageur passif à partir du satellite). Dans une étape suivante, on peut, après avoir déterminé ou estimé l'albédo moyen pm du débris, accéder à la surface apparente surf du débris, ce qui ensuite permet par l'intermédiaire de la distance du débris par rapport au satellite, de remonter à la taille du débris. Pour des débris d'une taille de l'ordre de la centaine de microns, la portée d'un dispositif de mesure de pollution spatiale selon l'invention peut être de l'ordre de la dizaine de mètres, tandis que pour des débris d'une taille de l'ordre de la dizaine de centimètres, la portée d'un dispositif de mesure de pollution spatiale selon l'invention peut être de l'ordre de quelques centaines de kilomètres, pour une valeur de l'albédo du débris qui est choisie par hypothèse comme valant environ un dixième.

Le dispositif de mesure de pollution spatiale selon l'invention comporte des moyens d'estimation cinématique déterminant le vecteur vitesse de chaque débris localisé. Le vecteur vitesse dudit débris est déterminé par composition de sa vitesse tangentielle et de sa vitesse radiale. La vitesse tangentielle du débris est avantageusement déterminée à partir de l'extension angulaire de la trace du débris considéré sur une image de l'espace. La vitesse tangentielle du débris est par exemple obtenue à partir de la distance du débris par rapport au satellite et à partir de la dérivation de la position angulaire du débris relevée sur plusieurs images de l'espace. La vitesse tangentielle du débris peut par exemple aussi être obtenue à partir de l'extension angulaire de la trace de débris sur une image de l'espace et à partir du temps d'intégration de cette image de l'espace. La vitesse radiale du débris est avantageusement déterminée à partir de plusieurs distances entre le débris considéré et le satellite respectivement déterminées sur plusieurs images de l'espace. La vitesse radiale est par exemple obtenue à partir de la dérivation de la distance relevée sur plusieurs images de l'espace.

Dans le cas d'une télémesure réalisée à partir du sol avec l'aide d'un satellite ayant embarqué un dispositif de mesure de pollution spatiale selon l'invention, ce dispositif de mesure de pollution spatiale comporte de préférence des moyens de communications avec une station terrestre. Les moyens de communications permettent au satellite d'envoyer des messages. Chaque message comprend plusieurs indications parmi lesquelles, une indication de date, une indication relative aux coordonnées et à l'attitude du satellite à ladite date, une indication relative à la classe d'un débris, une indication relative à la distance dudit débris par rapport au satellite à ladite date et une indication relative au vecteur vitesse dudit débris à ladite date.

Le dispositif de mesure de pollution spatiale selon l'invention est basé sur l'utilisation d'un imageur passif. L'imageur passif fonctionne de préférence dans le domaine spectral du visible, c'est-à-dire que les images fournies par l'imageur passif appartiennent à la bande spectrale du visible. La bande spectrale du visible est essentiellement constituée de la bande spectrale allant de 0,4$\mu$m jusqu'à 0,8$\mu$m. Un imageur passif fournissant des images dans le proche infrarouge est également envisageable quoique moins intéressant, car le maximum d'éclairement solaire se situe dans le domaine du visible. Un imageur passif fournissant des images dans l'infrarouge proprement dit, par exemple dans la bande II ou dans la bande III, est également possible quoique moins intéressant et plus difficile à mettre en oeuvre, nécessitant par exemple l'adjonction d'équipements cryogéniques.

L'imageur passif a de préférence une période image de l'ordre de la dizaine de Hertz et ne présente pas d'entrelacement. Compte tenu de la vitesse du satellite, une période image de l'ordre de la dizaine de Hertz est avantageusement choisie pour la portée envisagée. Le temps d'intégration par image de l'espace vaut par exemple environ 100ms, ce qui permet une cadence image d'environ 10Hz. Afin d'assurer une bonne couverture instantanée, de préférence l'imageur passif ne présente pas d'entrelacement comme dans les images de type télévision, et les périodes aveugles, notamment au niveau du transfert et de la lecture des données, restent négligeables. Afin de pouvoir d'une part détecter même les débris ayant un albédo moyen peu élevé et d'autre part présenter une portée relativement élevée, le détecteur que comporte l'imageur passif est choisi pour présenter avantageusement à la fois, un bon rendement quantique, un bon facteur de remplissage, une bonne homogénéité spatiale ainsi qu'un faible bruit d'obscurité et de lecture. L'imageur passif comporte de préférence un détecteur aminci éclairé par l'arrière à transfert de charges et à transfert de trame, c'est-à-dire un détecteur plus communément appelé détecteur CCD-FT aminci éclairé par l'arrière.

L'ouverture de l'optique frontale de l'imageur passif est avantageusement sensiblement comprise entre f/1 et f/2. Une optique très ouverte à f/1 est optimale, mais une optique moins ouverte peut convenir cependant. Le diamètre de l'optique frontale de l'imageur passif est préférentiellement sensiblement comprise entre 50mm et 100mm Le diamètre optimum pour une optique ouverte à f/1 vaut environ 100mm

L'imageur passif comporte de préférence un détecteur matriciel afin de pouvoir localiser angulairement la trace d'un débris sur une image de l'espace avec la meilleure précision possible. Le détecteur matriciel comporte avantageusement de l'ordre de mille détecteurs élémentaires ou pixels dans chaque direction, c'est par exemple un détecteur matriciel 1024 x 1024. Quoique moins précis, un détecteur matriciel 512 x 512 reste envisageable.

Le champ angulaire couvert par l'imageur passif vaut de préférence environ une dizaine de degrés en site comme en azimut, ce qui, compte tenu du nombre élevé de détecteurs élémentaires que contient le détecteur matriciel de l'imageur passif, permet généralement de réaliser pour les débris détectés et localisés une localisation angulaire et une mesure de distance des débris par rapport au satellite qui présentent la précision souhaitée dans les applications envisagées.

Dans une option de réalisation, le dispositif de mesure de pollution spatiale comporte plusieurs imageurs passifs fonctionnant respectivement dans différentes bandes spectrales et des moyens d'évaluation de la taille des débris déterminant d'une part la surface apparente d'un débris à partir de la classe dudit débris et à partir d'une table des albédos dans lesdites bandes spectrales de différents matériaux et d'autre part la taille dudit débris à partir de la surface apparente dudit débris et à partir de la distance dudit débris par rapport au satellite. C'est une méthode possible pour remonter de la classe d'un débris à sa taille.

L'utilisation d'un dispositif de mesure de pollution spatiale selon l'invention embarqué sur satellite et basé sur l'utilisation d'un imageur passif est particulièrement avantageuse, car les débris sont détectés sous forme de traces sur des images de l'espace au lieu d'être détectés sous forme de points brillants. La possibilité d'exploiter des traces et pas seulement des points rend l'imageur passif très sensible et très efficace. L'utilisation d'un imageur passif offre en outre une possibilité de recalage sur les étoiles fixes.

Le satellite sur lequel le dispositif de mesure de pollution spatiale est destiné à être embarqué est de préférence un microsatellite dont le volume typiquement n'excède pas le mètre cube. Le dispositif de mesure de pollution spatiale selon l'invention basé sur l'utilisation d'un imageur passif présente un avantage supplémentaire, celui d'une faible consommation électrique par rapport à celle d'un dispositif qui utiliserait un imageur actif.

Plusieurs utilisations peuvent être faites des classes de débris déterminées par le dispositif de mesure de la pollution spatiale ainsi que de leur vitesse. Par exemple, cette mesure de la pollution spatiale peut être utilisée pour recaler des modèles théoriques de mesure de pollution spatiale dans une gamme de débris dont la taille varie sensiblement de 100$\mu$m à 10cm.

Le dispositif de mesure spatiale selon l'invention peut aussi être associé à un détecteur de collision destiné à être embarqué sur tout satellite devant être mis sur orbite.

**EP 1 168 003 B1**

### Revendications

**1.** Dispositif de mesure de pollution spatiale, destiné à être embarqué sur satellite, comportant :

- au moins un imageur passif (1) pouvant fournir des images (IE) de l'espace ;
- des moyens (2) de détection des débris (6) spatiaux présents sur les images (IE) de l'espace, déterminant la trace (TD) desdits débris (6) ;
- des moyens (3) de localisation distance des débris (6) détectés, déterminant les distances (DDS) des débris (6) détectés par rapport au satellite à partir de la trace (TD) desdits débris (6), des moyens (4) de classification des débris (6) localisés, à
- des moyens (4) de classification des débris (6) localisés, déterminant pour chaque débris (6) localisé sa classe (CD) qui est le produit de son albédo moyen (ρm) par sa surface apparente (surf) à partir des distances (DDS) des débris (6).

**2.** Dispositif de mesure de pollution spatiale selon la revendication 1, **caractérisé en ce que** les moyens (2) de détection réalisent un filtrage des images (IE) de l'espace qui soit adapté aux débris (6) en facilitant l'extraction des traces (TD) sensiblement rectilignes à partir des images (IE) de l'espace.

**3.** Dispositif de mesure de pollution spatiale selon la revendication 2, **caractérisé en ce que** le filtrage comporte une transformation de Hough.

**4.** Dispositif de mesure de pollution spatiale selon la revendication 3, **caractérisé en ce que** la transformation de Hough est appliquée aux images (IE) de l'espace sans seuillage préalable.

**5.** Dispositif de mesure de pollution spatiale selon la revendication 4, **caractérisé en ce que** après la transformation de Hough, le filtrage effectue, dans le domaine de Hough, une intégration, une normalisation à l'aide d'une image de comptage, un seuillage.

**6.** Dispositif de mesure de pollution spatiale selon l'une quelconque des revendications 3 à 5, **caractérisé en ce qu'**en parallèle de la transformation de Hough sans seuillage préalable des images (IE) de l'espace, le filtrage effectue une autre transformation de Hough (23) après seuillage préalable (22) des images (IE) de l'espace.

**7.** Dispositif de mesure de pollution spatiale selon l'une quelconque des revendications 5 et 6, **caractérisé en ce que** le seuillage est effectué avec un seuil valant sensiblement trois fois le niveau de bruit.

**8.** Dispositif de mesure de pollution spatiale selon l'une quelconque des revendications précédentes, **caractérisé en ce que** les moyens (3) de localisation distance réalisent une triangulation dynamique à partir de plusieurs images (IE) de l'espace, la triangulation dynamique comportant successivement, pour la détermination de la distance (DDS) entre un débris (6) détecté et le satellite :

- une étape d'estimation de la vitesse angulaire dudit débris (6) détecté à partir de l'extension angulaire de la trace (TD) dudit débris (6) détecté sur l'une desdites images (IE) de l'espace ;
- une étape d'extrapolation ramenant à un même instant (t1) les positions (C, D) dudit débris (6) détecté correspondant respectivement aux différentes traces (TD) dudit débris (6) détecté respectivement présentes sur lesdites images (IE) de l'espace ;
- une étape de triangulation classique des positions extrapolées (C, D').

**9.** Dispositif de mesure de pollution spatiale selon la revendication 8, **caractérisé en ce que** la triangulation dynamique est réalisée à partir de deux images (IE) de l'espace consécutives dans le temps.

**10.** Dispositif de mesure de pollution spatiale selon l'une quelconque des revendications 8 à 9, **caractérisé en ce que** la distance intersatellite entre deux images (IE) de l'espace consécutives dans le temps vaut quelques centaines de mètres.

**11.** Dispositif de mesure de pollution spatiale selon l'une quelconque des revendications précédentes, **caractérisé en ce que** la classe (CD) d'un débris (6) est déterminée à partir de la distance (DDS) dudit débris (6) par rapport au satellite et à partir de l'amplitude (ASTD) du signal correspondant à la trace (TD) dudit débris (6) sur une image (IE) de l'espace.

**12.** Dispositif de mesure de pollution spatiale selon la revendication 11, **caractérisé en ce que** les moyens (4) de classification réalisent, pour la détermination de la classe (CD) d'un débris (6), une étape de calcul de la classe (CD) p.surf dudit débris (6), pm étant l'albédo moyen dudit débris et surf sa surface apparente, à partir de la formule suivante :

$$\rho m \cdot surf = \frac{ASTD \cdot d^2}{K_{caméra} \cdot T_{int} \cdot E_{solaire}}$$

avec d distance dudit débris (6) par rapport au satellite, $K_{caméra}$ une constante dépendant de l'imageur passif (1), $T_{int}$ le temps d'intégration de l'imageur passif (1), $E_{solaire}$ l'éclairement solaire, ASTD l'amplitude du signal de la trace (TD) du débris (6).

**13.** Dispositif de mesure de pollution spatiale selon l'une quelconque des revendications précédentes, **caractérisé en ce que** le dispositif de mesure de pollution spatiale comporte des moyens (5) d'estimation cinématique déterminant le vecteur vitesse VVD) de chaque débris (6) localisé.

**14.** Dispositif de mesure de pollution spatiale selon la revendication 13, **caractérisé en ce que** le vecteur vitesse (WD) dudit débris (6) est déterminé par composition de sa vitesse tangentielle et de sa vitesse radiale, la vitesse tangentielle étant déterminée à partir de l'extension angulaire de la trace (TD) dudit débris (6) sur une image (IE) de l'espace, la vitesse radiale étant déterminée à partir de plusieurs distances (DDS) entre ledit débris (6) et le satellite respectivement déterminées sur plusieurs images (IE) de l'espace.

**15.** Dispositif de mesure de pollution spatiale selon l'une quelconque des revendications précédentes, **caractérisé en ce que** le dispositif de mesure de pollution spatiale comporte des moyens de réjection des fausses alarmes par confirmation des détections de débris (6) sur plusieurs images (IE) de l'espace consécutives dans le temps.

**16.** Dispositif de mesure de pollution spatiale selon l'une quelconque des revendications précédentes, **caractérisé en ce que** le dispositif de mesure de pollution spatiale comporte des moyens (11, 12, 13, 14) de prétraitement des images (IE) de l'espace destinés à être mis en oeuvre en amont des moyens (2) de détection, les moyens (11, 12, 13, 14) de prétraitement effectuant tout ou partie des opérations suivantes :

- une opération (11) de correction des défauts de l'imageur passif (1) ;
- une opération (12) de recalage spatial de chaque image (10) de l'espace par rapport à une image référence (15) ;
- une opération de réjection des étoiles fixes ainsi que de leur tache de smearing, à partir de plusieurs images (10) de l'espace consécutives dans le temps ;
- une opération de soustraction de l'image de référence (15) à chaque image (10) de l'espace.

**17.** Dispositif de mesure de pollution spatiale selon l'une quelconque des revendications précédentes, **caractérisé en ce que** le dispositif de mesure de pollution spatiale comporte des moyens de communications avec une station terrestre, les moyens de communications permettant au satellite d'envoyer des messages comprenant chacun :

- une indication de date ;
- une indication relative aux coordonnées et à l'attitude du satellite à ladite date ;
- une indication relative à la classe (CD) d'un débris (6) ;
- une indication relative à la distance (DDS) dudit débris (6) par rapport au satellite à ladite date ;
- une indication relative au vecteur vitesse (WD) dudit débris (6) à ladite date.

**18.** Dispositif de mesure de pollution spatiale selon l'une quelconque des revendications précédentes, **caractérisé en ce que** les images (IE) fournies par l'imageur passif (1) appartiennent à la bande spectrale du visible.

**19.** Dispositif de mesure de pollution spatiale selon l'une quelconque des revendications précédentes, **caractérisé en ce que** l'imageur passif (1) a une période image de l'ordre de la dizaine de Hertz et ne présente pas d'entrelacement.

**20.** Dispositif de mesure de pollution spatiale selon la revendication 19, **caractérisé en ce que** l'imageur passif (1) comporte un détecteur aminci éclairé par l'arrière à transfert de charges.

**21.** Dispositif de mesure de pollution spatiale selon l'une quelconque des revendications précédentes, **caractérisé en ce que** l'ouverture de l'optique frontale de l'imageur passif (1) est sensiblement comprise entre f/1 et f/2.

**22.** Dispositif de mesure de pollution spatiale selon la revendication 21, **caractérisé en ce que** l'ouverture de l'optique frontale de l'imageur passif (1) vaut de l'ordre de f/1.

**23.** Dispositif de mesure de pollution spatiale selon l'une quelconque des revendications précédentes, **caractérisé en ce que** le diamètre de l'optique frontale de l'imageur passif (1) est sensiblement compris entre 50mm et 100mm.

**24.** Dispositif de mesure de pollution spatiale selon l'une quelconque des revendications précédentes, **caractérisé en ce que** l'imageur passif (1) comporte un détecteur matriciel de l'ordre de mille pixels dans chaque direction.

**25.** Dispositif de mesure de pollution spatiale selon l'une quelconque des revendications précédentes, **caractérisé en ce que** le champ angulaire couvert par l'imageur passif (1) vaut environ une dizaine de degrés en site comme en azimut.

**26.** Dispositif de mesure de pollution spatiale selon l'une quelconque des revendications précédentes, **caractérisé en ce que** le dispositif de mesure de pollution spatiale comporte plusieurs imageurs passifs (1) fonctionnant respectivement dans différentes bandes spectrales et des moyens d'évaluation de la taille des débris (6) déterminant d'une part la surface apparente (surf) d'un débris (6) à partir de la classe (CD) dudit débris (6) et à partir d'une table des albédos dans lesdites bandes spectrales de différents matériaux et d'autre part la taille dudit débris (6) à partir de la surface apparente (surf) dudit débris (6) et à partir de la distance (DDS) dudit débris (6) par rapport au satellite.

**27.** Dispositif de mesure de pollution spatiale selon l'une quelconque des revendications précédentes, **caractérisé en ce que** le satellite sur lequel le dispositif de mesure de pollution spatiale est destiné à être embarqué est un microsatellite.

**28.** Utilisation d'un dispositif de mesure de pollution spatiale selon l'une quelconque des revendications 1 à 27, pour recaler des modèles théoriques de mesure de pollution spatiale dans une gamme de débris (6) dont la taille varie sensiblement de 100$\mu$m à 10cm.

**29.** Détecteur de collision étant destiné à être embarqué sur satellite et comportant un dispositif de mesure de pollution spatiale selon l'une quelconque des revendications 1 à 27.

**Claims**

**1.** Device for measuring space pollution, intended to be satellite borne, comprising:

- at least one passive imager (1) able to provide images (IE) of space;
- means (2) for detecting the space debris (6) present on the images (IE) of space, determining the track (TD) of the said debris (6);
- means (3) of distance location of the debris (6) detected, determining the distances (DDS) of the debris (6) detected with respect to the satellite on the basis of the track (TD) of the said debris (6);
- means (4) for classifying the debris (6) located, determining for each piece of debris (6) located its class (CD) which is the product of its mean albedo ($\rho$m) times its apparent surface area (surf) on the basis of the distances (DDS) of the debris (6).

**2.** Device for measuring space pollution according to Claim 1, **characterized in that** the detection means (2) carry out a filtering of the images (IE) of space which is adapted to the debris (6) by facilitating the extraction of the substantially rectilinear tracks (TD) on the basis of the images (IE) of space.

**3.** Device for measuring space pollution according to Claim 2, **characterized in that** the filtering comprises a Hough transformation.

**4.** Device for measuring space pollution according to Claim 3, **characterized in that** the Hough transformation is applied to the images (IE) of space without prior thresholding.

5. Device for measuring space pollution according to Claim 4, **characterized in that** after the Hough transformation, the filtering performs, in the Hough domain, an integration, a normalization with the aid of a counting image, a thresholding.

6. Device for measuring space pollution according to any one of Claims 3 to 5, **characterized in that** in parallel with the Hough transformation without prior thresholding of the images (IE) of space, the filtering performs another Hough transformation (23) after prior thresholding (22) of the images (IE) of space.

7. Device for measuring space pollution according to any one of Claims 5 and 6, **characterized in that** the thresholding is performed with a threshold equal to substantially three times the noise level.

8. Device for measuring space pollution according to any one of the preceding claims, **characterized in that** the means (3) of distance location carry out a dynamic triangulation on the basis of several images (IE) of space, the dynamic triangulation comprising successively, for the determination of the distance (DDS) between a detected piece of debris (6) and the satellite:

   - a step of estimating the angular velocity of the said debris (6) detected on the basis of the angular extent of the track (TD) of the said debris (6) detected on one of the said images (IE) of space;
   - a step of extrapolation whereby the positions (C, D) of the said detected debris (6) corresponding respectively to the various tracks (TD) of the said detected debris (6) respectively present on the said images (IE) of space are referred to one and the same instant (t1) ;
   - a step of conventional triangulation of the extrapolated positions (C, D').

9. Device for measuring space pollution according to Claim 8, **characterized in that** the dynamic triangulation is carried out on the basis of two temporally consecutive images (IE) of space.

10. Device for measuring space pollution according to any one of Claims 8 to 9, **characterized in that** the intersatellite distance between two temporally consecutive images (IE) of space equals a few hundred metres.

11. Device for measuring space pollution according to any one of the preceding claims, **characterized in that** the class (CD) of a piece of debris (6) is determined on the basis of the distance (DDS) of the said debris (6) with respect to the satellite and on the basis of the amplitude (ASTD) of the signal corresponding to the track (TD) of the said debris (6) on an image (IE) of space.

12. Device for measuring space pollution according to Claim 11, **characterized in that** the classification means (4) carry out, for the determination of the class (CD) of a piece of debris (6), a step of calculating the class (CD) p.surf of the said debris (6), pm being the mean albedo of the said debris and surf its apparent surface area, on the basis of the following formula:

$$\rho m.surf = ASTD.d^2/(K_{camera}.\ T_{int}.\ E_{solar})$$

with d distance of the said debris (6) with respect to the satellite, $K_{camera}$ a constant dependent on the passive imager (1), $T_{int}$ the integration time of the passive imager (1), $E_{solar}$ the solar illumination, ASTD the amplitude of the signal of the track (TD) of the debris (6).

13. Device for measuring space pollution according to any one of the preceding claims, **characterized in that** the device for measuring space pollution comprises means (5) of kinematic estimation determining the velocity vector (VVD) of each piece of debris (6) located.

14. Device for measuring space pollution according to Claim 13, **characterized in that** the velocity vector (VVD) of the said debris (6) is determined by composition of its tangential velocity and its radial velocity, the tangential velocity being determined on the basis of the angular extent of the track (TD) of the said debris (6) on an image (IE) of space, the radial velocity being determined on the basis of several distances (DDS) between the said debris (6) and the satellite respectively determined on several images (IE) of space.

15. Device for measuring space pollution according to any one of the preceding claims, **characterized in that** the device for measuring space pollution comprises means for rejecting false alarms by confirmation of the detections of debris (6) on several temporally consecutive images (IE) of space.

16. Device for measuring space pollution according to any one of the preceding claims, **characterized in that** the device for measuring space pollution comprises means (11, 12, 13, 14) for preprocessing the images (IE) of space intended to be implemented upstream of the detection means (2), the preprocessing means (11, 12, 13, 14) performing all or some of the following operations:

   - an operation (11) of correcting the defects of the passive imager (1);
   - an operation (12) of spatial registration of each image (10) of space with respect to a reference image (15);
   - an operation of rejecting the fixed stars as well as their smearing spot, on the basis of several temporally consecutive images (10) of space;
   - an operation of subtracting the reference image (15) from each image (10) of space.

17. Device for measuring space pollution according to any one of the preceding claims, **characterized in that** the device for measuring space pollution comprises means for communication with a terrestrial station, the communication means allowing the satellite to dispatch messages each comprising:

   - a date indication;
   - an indication relating to the coordinates and to the attitude of the satellite at the said date;
   - an indication relating to the class (CD) of a piece of debris (6);
   - an indication relating to the distance (DDS) of the said debris (6) with respect to the satellite at the said date;
   - an indication relating to the velocity vector (VVD) of the said debris (6) at the said date.

18. Device for measuring space pollution according to any one of the preceding claims, **characterized in that** the images (IE) provided by the passive imager (1) belong to the visible spectral band.

19. Device for measuring space pollution according to any one of the preceding claims, **characterized in that** the passive imager (1) has an image period of the order of some ten Hertz and does not exhibit any interlacing.

20. Device for measuring space pollution according to Claim 19, **characterized in that** the passive imager (1) comprises a charge transfer back-illuminated slimline detector.

21. Device for measuring space pollution according to any one of the preceding claims, **characterized in that** the aperture of the front optic of the passive imager (1) lies substantially between f/1 and f/2.

22. Device for measuring space pollution according to Claim 21, **characterized in that** the aperture of the front optic of the passive imager (1) equals of the order of f/1.

23. Device for measuring space pollution according to any one of the preceding claims, **characterized in that** the diameter of the front optic of the passive imager (1) lies substantially between 50 mm and 100 mm.

24. Device for measuring space pollution according to any one of the preceding claims, **characterized in that** the passive imager (1) comprises a matrix detector of the order of a thousand pixels in each direction.

25. Device for measuring space pollution according to any one of the preceding claims, **characterized in that** the angular field covered by the passive imager (1) equals about ten degrees in elevation as in azimuth.

26. Device for measuring space pollution according to any one of the preceding claims, **characterized in that** the device for measuring space pollution comprises several passive imagers (1) operating respectively in various spectral bands and means for evaluating the size of the debris (6) on the one hand determining the apparent surface area (surf) of a piece of debris (6) on the basis of the class (CD) of the said debris (6) and on the basis of a table of the albedos in the said spectral bands of various materials and on the other hand the size of the said debris (6) on the basis of the apparent surface area (surf) of the said debris (6) and on the basis of the distance (DDS) of the said debris (6) with respect to the satellite.

27. Device for measuring space pollution according to any one of the preceding claims, **characterized in that** the satellite on which the device for measuring space pollution is intended to be borne is a microsatellite.

**28.** Use of a device for measuring space pollution according to any one of Claims 1 to 27, to tailor theoretical models of measurement of space pollution in a debris (6) range whose size varies substantially from 100 $\mu$m to 10 cm

**29.** Collision detector being intended to be satellite borne and comprising a device for measuring space pollution according to any one of Claims 1 to 27.

**Patentansprüche**

**1.** Vorrichtung zur Messung der räumlichen Verschmutzung, die dazu bestimmt ist, auf einem Satelliten mitgeführt zu werden, Folgendes aufweisend:

- mindestens einen passiven Bildgenerator (1), der Bilder (IE) des Raums liefern kann;
- Mittel (2) zum Erfassen von Raummülltrümmern (6), die auf den Bildern (IE) des Raums vorhanden sind, die die Spur (TD) der Raummülltrümmer (6) bestimmen;
- Mittel (3) zum entfernten Lokalisieren der erfassten Raummülltrümmer (6), die die Entfernungen (DDS) der erfassten Raummülltrümmer (6) in Bezug zu dem Satelliten ausgehend von der Spur (TD) der Raummülltrümmer (6) bestimmen;
- Mittel (4) zur Klassifikation der lokalisierten Raummülltrümmer (6), die für jedes lokalisierte Raummülltrumm (6) seine Klasse (CD) bestimmem, die das Produkt seiner mittleren Albedo ($\rho$m) mit seiner sichtbaren Fläche (surf) ist, ausgehend von den Entfernungen (DDS) der Raummülltrümmer (6).

**2.** Vorrichtung zur Messung der räumlichen Verschmutzung nach Anspruch 1, **dadurch gekennzeichnet, dass** die Mittel (2) zum Erfassen ein Filtern der Bilder (IE) des Raums ausführen, das an die Raummülltrümmer (6) angepasst ist, indem das Extrahieren der im Wesentlichen geradlinigen Spuren (TD) ausgehend von den Bildern (IE) des Raums erleichtert wird.

**3.** Vorrichtung zur Messung der räumlichen Verschmutzung nach Anspruch 2, **dadurch gekennzeichnet, dass** das Filtern eine Hough-Transformation aufweist.

**4.** Vorrichtung zur Messung der räumlichen Verschmutzung nach Anspruch 3, **dadurch gekennzeichnet, dass** die Hough-Transformation auf die Bilder (IE) des Raums ohne vorheriges Schwellenwertverfahren angewandt wird.

**5.** Vorrichtung zur Messung der räumlichen Verschmutzung nach Anspruch 4, **dadurch gekennzeichnet, dass** das Filtern nach der Hough-Transformation in der Hough-Domäne eine Integration, eine Normalisierung mit Hilfe eines Zählbilds, ein Schwellenwertverfahren ausführt.

**6.** Vorrichtung zur Messung der räumlichen Verschmutzung nach einem der Ansprüche 3 bis 5, **dadurch gekennzeichnet, dass** das Filtern parallel zu der Hough-Transformation ohne vorheriges Schwellenwertverfahren der Bilder (IE) des Raums eine weitere Hough-Transformation (23) nach vorherigem Schwellenwertverfahren (22) der Bilder (IE) des Raums ausführt.

**7.** Vorrichtung zur Messung der räumlichen Verschmutzung nach einem der Ansprüche 5 und 6, **dadurch gekennzeichnet, dass** das Schwellenwertverfahren mit einem Schwellenwert ausgeführt wird, der im Wesentlichen das dreifache des Rauschpegels beträgt.

**8.** Vorrichtung zur Messung der räumlichen Verschmutzung nach einem der vorhergehenden Ansprüche, **dadurch gekennzeichnet, dass** die Mittel (3) zum entfernten Lokalisieren eine dynamische Triangulation ausgehend von mehreren Bildern (IE) des Raums ausführen, wobei die dynamische Triangulation nacheinander zum Bestimmen der Entfernung (DDS) zwischen einem erfassten Raummülltrumm (6) und dem Satelliten Folgendes aufweist:

- einen Schritt des Schätzens der Winkelgeschwindigkeit des erfassten Raummülltrumms (6) ausgehend von der Winkelerweiterung der Spur (TD) des Raummülltrumms (6), das auf einem der Bilder (IE) des Raums erfasst wurde;
- einen Schritt des Extrapolierens, das die Positionen (C, D) des erfassten Raummülltrumms (6), die jeweils den unterschiedlichen Spuren (TD) des erfassten Raummülltrumms (6), die jeweils auf den Bildern (IE) des Raums gegenwärtig sind, entsprechen, auf einen gleichen Zeitpunkt (t1) zurückbringt;
- einen Schritt des herkömmlichen Triangulierens der extrapolierten Positionen (C, D').

**9.** Vorrichtung zur Messung der räumlichen Verschmutzung nach Anspruch 8, **dadurch gekennzeichnet, dass** die dynamische Triangulation ausgehend von zwei Bildern (IE) des Raums, die zeitlich aufeinander folgen, ausgeführt wird.

**10.** Vorrichtung zur Messung der räumlichen Verschmutzung nach einem der Ansprüche 8 bis 9, **dadurch gekennzeichnet, dass** die Intersatellitenentfernung zwischen zwei zeitlich aufeinander folgenden Bildern (IE) des Raums einigen hundert Metern entspricht.

**11.** Vorrichtung zur Messung der räumlichen Verschmutzung nach einem der vorhergehenden Ansprüche, **dadurch gekennzeichnet, dass** die Klasse (CD) eines Raummülltrumms (6) ausgehend von der Entfernung (DDS) des Raummülltrumms (6) zu dem Satelliten und ausgehend von der Amplitude (ASTD) des Signals, das der Spur (TD) des Raummülltrumms (6) auf einem Bild (IE) des Raums, entspricht, bestimmt wird.

**12.** Vorrichtung zur Messung der räumlichen Verschmutzung nach Anspruch 11, **dadurch gekennzeichnet, dass** die Mittel (4) zur Klassifikation zum Bestimmen der Klasse (CD) eines Raummülltrumms (6) einen Schritt zum Berechnen der Klasse (CD) p.surf des Raummülltrumms (6) ausführen, wobei pm die mittlere Albedo des Raummülltrumms und surf seine sichtbare Fläche ist, ausgehend von der folgenden Formel:

$$\rho m.surf = \frac{ASTD.d^2}{K_{caméra}.T_{int}.E_{solaire}}$$

wobei d die Entfernung des Raummülltrumms (6) zu dem Satelliten ist, $K_{caméra}$ eine Konstante ist, die von dem passiven Bildgenerator (1) abhängt, $T_{int}$ die Integrationszeit des passiven Bildgenerators (1), $E_{solaire}$ die Sonnenbeleuchtung, ASTD die Amplitude des Signals der Spur (TD) des Raummülltrumms (6) ist.

**13.** Vorrichtung zur Messung der räumlichen Verschmutzung nach einem der vorhergehenden Ansprüche, **dadurch gekennzeichnet, dass** die Vorrichtung zur Messung der räumlichen Verschmutzung Mittel (5) zum kinematischen Schätzen aufweist, die den Geschwindigkeitsvektor (VVD) jedes lokalisierten Raummülltrumms (6) bestimmen.

**14.** Vorrichtung zur Messung der räumlichen Verschmutzung nach Anspruch 13, **dadurch gekennzeichnet, dass** der Geschwindigkeitsvektor (VVD) des Raummülltrumms (6) durch Verknüpfen seiner Tangentialgeschwindigkeit und seiner Radialgeschwindigkeit bestimmt wird, wobei die Tangentialgeschwindigkeit ausgehend von der Winkelerweiterung der Spur (TD) des Raummülltrumms (6) auf einem Bild (IE) des Raums bestimmt wird, wobei die Radialgeschwindigkeit ausgehend von mehreren Entfernungen (DDS) zwischen dem Raummülltrumm (6) und dem Satelliten bestimmt wird, die jeweils auf mehreren Bildern (IE) des Raums bestimmt werden.

**15.** Vorrichtung zur Messung der räumlichen Verschmutzung nach einem der vorhergehenden Ansprüche, **dadurch gekennzeichnet, dass** die Vorrichtung zur Messung der räumlichen Verschmutzung Mittel zum Aussondern von Fehlalarmen durch Bestätigen der Erfassungen von Raummülltrümmern (6) auf mehreren zeitlich aufeinander folgenden Bildern (IE) des Raums aufweist.

**16.** Vorrichtung zur Messung der räumlichen Verschmutzung nach einem der vorhergehenden Ansprüche, **dadurch gekennzeichnet, dass** die Vorrichtung zur Messung der räumlichen Verschmutzung Mittel (11, 12, 13, 14) zum Vorverarbeiten der Bilder (IE) des Raums aufweist, die dazu bestimmt sind, stromaufwärts der Erfassungsmittel (2) umgesetzt zu werden, wobei die Mittel (11, 12, 13, 14) zum Vorverarbeiten alle oder einen Teil der folgenden Operationen ausführen:

- eine Operation (11) zur Korrektur der Fehler des passiven Bildgenerators (1);
- eine Operation (12) zum räumlichen Einstellen jedes Bilds (10) des Raums in Bezug auf ein Referenzbild (15);
- eine Operation zum Aussondern der Fixsterne sowie ihres Schlierflecks ausgehend von mehreren zeitlich aufeinander folgenden Bildern (10) des Raums;
- eine Operation des Subtrahierens des Referenzbilds (15) von jedem Bild (10) des Raums.

**17.** Vorrichtung zur Messung der räumlichen Verschmutzung nach einem der vorhergehenden Ansprüche, **dadurch gekennzeichnet, dass** die Vorrichtung zum Messen räumlicher Verschmutzung Mittel für Kommunikationen mit einer Bodenstation aufweist, wobei es die Kommunikationsmittel dem Satelliten erlauben, Meldungen zu senden, die jeweils Folgendes aufweisen:

- eine Datumsangabe;
- eine Angabe zu den Koordinaten und der Höhe des Satelliten zu dem angegebenen Datum;
- eine Angabe zu der Klasse (CD) eines Raummülltrumms (6);
- eine Angabe zu der Entfernung (DDS) des Raummülltrumms (6) in Bezug auf den Satelliten zu dem Datum;
- eine Angabe zu dem Geschwindigkeitsvektor (VVD) des Raummülltrumms (6) zu dem Datum.

18. Vorrichtung zur Messung der räumlichen Verschmutzung nach einem der vorhergehenden Ansprüche, **dadurch gekennzeichnet, dass** die von dem passiven Bildgenerator (1) gelieferten Bilder (IE) zu dem sichtbaren Spektralband gehören.

19. Vorrichtung zur Messung der räumlichen Verschmutzung nach einem der vorhergehenden Ansprüche, **dadurch gekennzeichnet, dass** der passive Bildgenerator (1) eine Bildperiode in der Größenordnung von etwa zehn Hertz hat und keine Verschachtelung aufweist.

20. Vorrichtung zur Messung der räumlichen Verschmutzung nach Anspruch 19, **dadurch gekennzeichnet, dass** der passive Bildgenerator (1) einen verdünnten Detektor mit Ladungsübertragung aufweist, der von hinten beleuchtet ist.

21. Vorrichtung zur Messung der räumlichen Verschmutzung nach einem der vorhergehenden Ansprüche, **dadurch gekennzeichnet, dass** die Apertur der frontalen Optik des passiven Bildgenerators (1) im Wesentlichen zwischen f/1 und f/2 beträgt.

22. Vorrichtung zur Messung der räumlichen Verschmutzung nach Anspruch 21, **dadurch gekennzeichnet, dass** die Apertur der frontalen Optik des passiven Bildgenerators (1) in der Größenordnung von f/1 liegt.

23. Vorrichtung zur Messung der räumlichen Verschmutzung nach einem der vorhergehenden Ansprüche, **dadurch gekennzeichnet, dass** der Durchmesser der frontalen Optik des passiven Bildgenerators (1) im Wesentlichen zwischen 50 mm und 100 mm liegt.

24. Vorrichtung zur Messung der räumlichen Verschmutzung nach einem der vorhergehenden Ansprüche, **dadurch gekennzeichnet, dass** der passive Bildgenerator (1) einen Matrixdetektor in der Größenordnung von eintausend Pixel in jede Richtung aufweist.

25. Vorrichtung zur Messung der räumlichen Verschmutzung nach einem der vorhergehenden Ansprüche, **dadurch gekennzeichnet, dass** das von dem passiven Bildgenerator (1) gedeckte Winkelfeld etwa zehn Grad Geländewinkel und Richtungswinkel beträgt.

26. Vorrichtung zur Messung der räumlichen Verschmutzung nach einem der vorhergehenden Ansprüche, **dadurch gekennzeichnet, dass** die Vorrichtung zur Messung der räumlichen Verschmutzung mehrere passive Bildgeneratoren (1), die jeweils in unterschiedlichen Spektralbändern funktionieren, und Mittel zum Beurteilen der Größe der Raummülltrümmer (6) aufweist, die einerseits die sichtbare Fläche (surf) eines Raummülltrumms (6) ausgehend von der Klasse (CD) des Raummülltrumms (6) und ausgehend von einer Tabelle der Albedos in den Spektralbändern verschiedener Materialien und andererseits die Größe des Raummülltrumms (6) ausgehend von der sichtbaren Fläche (surf) des Raummülltrumms (6) und ausgehend von der Entfernung (DDS) des Raummülltrumms (6) von dem Satelliten bestimmen.

27. Vorrichtung zur Messung der räumlichen Verschmutzung nach einem der vorhergehenden Ansprüche, **dadurch gekennzeichnet, dass** der Satellit, auf dem die Messvorrichtung räumlicher Verschmutzung mitgeführt werden soll, ein Mikrosatellit ist.

28. Einsatz einer Vorrichtung zur Messung der räumlichen Verschmutzung nach einem der Ansprüche 1 bis 27, um theoretische Modelle zur Messung der räumlichen Verschmutzung in einem Bereich von Raummülltrümmern (6), deren Größe im Wesentlichen von 100 $\mu$m bis 10 cm variiert, einzustellen.

29. Kollisionsdetektor, der dazu bestimmt ist, auf einem Satelliten mitgeführt zu werden und der eine Vorrichtung zur Messung der räumlichen Verschmutzung nach einem der Ansprüche 1 bis 27 aufweist.

DÉBRIS 6

FL  FL  FL

IMAGEUR PASSIF 1

IE

DÉTECTION 2

ASTD  TD

LOCALISATION DISTANCE 3

DDS

CLASSIFICATION 4

ESTIMATION CINÉMATIQUE 5

CD

VVD

FIG.1

**FIG.2**

ORBITE DÉBRIS

C à t1

D à t2

DOMAINE DE
TRIANGULATION

DOMAINE DE
DÉTECTION

ORBITE SATELLITE

A à t1    B à t2

# FIG.3